# EUROPEAN PATENT APPLICATION

(11) **EP 4 369 165 A1**
(43) Date of publication of application: **15.05.2024**
(21) Application number: 23209238.7
(22) Date of filing: 10.11.2023
(51) Int. Cl.: G06F 3/04855, G06F 3/04883, G06F 3/04886

(54) **MAGNIFIED UP/DOWN SCROLL AID**

(30) Priority: 11.11.2022 US 202217985430
(71) Applicant: Rockwell Collins, Inc., Cedar Rapids, IA 52498 (US)
(72) Inventor: THIRUCHIRAPALLI, Vaidyanathan, Marion, IA, 52302 (US)
(74) Representative: Dehns

(57) **Abstract**

A system and method for controlling a scrolling function in a touchscreen display (104) defines a touch sensitive region for the scrollbar. When the touch sensitive region receives a press-and-hold input, the system renders large directional inputs for the corresponding window / list selection window and enters a persistent state wherein the directional inputs supersede the scrolling function. The scrollbar input may be deactivated during the persistent state. The persistent state is exited when the user makes a selection outside the directional inputs. The system may define press-and-hold touch sensitive regions larger than the touch sensitive region for the scrollbar generally. The larger press-and-hold regions may be associated with, and extend beyond, a currently active window / dialog box.

## Description

### BACKGROUND

Touchscreen displays in avionics systems, particularly windows with multiple list selections, often include scrollbars with very small touch regions. Using such scrollbars often is difficult and cause user input error: for example, the user may overshoot the desired selection, select an unintended item from a menu, touch an area outside a selection region and close the dialogue box or make an unintended selection, etc. Such issues are a nuisance to pilots and may be dangerous if they result in unidentified, erroneous selections.

It would be advantageous to have a system and method for precisely controlling scrolling in touchscreen displays.

### SUMMARY

In one aspect, embodiments of the inventive concepts disclosed herein are directed to a system and method for controlling a scrolling function in a touchscreen display. The display defines a touch sensitive region for the scrollbar. When the touch sensitive region receives a press-and-hold input, the system renders large directional inputs for the corresponding window / list selection window and enters a persistent state wherein the directional inputs supersede the scrolling function.

In a further aspect, the scrollbar input may be deactivated during the persistent state. The persistent state is exited when the user makes a selection outside the directional inputs.

In a further aspect, the system may define press-and-hold touch sensitive regions larger than the touch sensitive region for the scrollbar generally. The larger press-and-hold regions may be associated with, and extend beyond, a currently active window / dialog box.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows a block diagram of a system useful for implementing an exemplary embodiment;
FIG. 2 shows a block representation of a display window useful for implementing exemplary embodiments;
FIG. 3 shows a detail block representation of a portion of a portion of a display window with list selection and a scrollbar according to an exemplary embodiment;
FIG. 4A shows a detail block representation of a portion of a display window having a magnified scroll feature according to an exemplary embodiment;
FIG. 4B shows a detail block representation of a portion of a display window having a magnified scroll feature according to an exemplary embodiment;
FIG. 4C shows a detail block representation of a portion of a display window having a magnified scroll feature according to an exemplary embodiment;
FIG. 5 shows a flowchart of a method according to an exemplary embodiment;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to a system and method for controlling a scrolling function in a touchscreen display. The display defines a touch sensitive region for the scrollbar. When the touch sensitive region receives a press-and-hold input (i.e., a relatively stationary touch input lasting more than about a second), the system renders large directional inputs for the corresponding window / list selection window and enters a persistent state wherein the directional inputs supersede the scrolling function. The scrollbar input may be deactivated during the persistent state. The persistent state is exited when the user makes a selection outside the directional inputs. The system may define press-and-hold touch sensitive regions larger than the touch sensitive region for the scrollbar generally. The larger press-and-hold regions may be associated with, and extend beyond, a currently active window / dialog box.

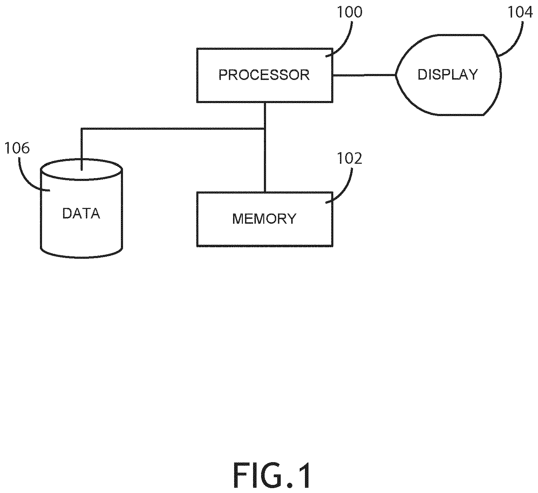

Referring to FIG. 1, a block diagram of a system useful for implementing an exemplary embodiment is shown. The system includes a processor 100, memory 102 for embodying processor executable code in data communication with the processor 100, and a touch sensitive display 104 in data communication with the processor 100. The processor 100 is configured to render windows / list selection windows on the touch sensitive display 104; one or more of the list selection windows may be populated with data from data storage device 106 that exceeds the capacity of the window / dialog box. In that case the processor 100 renders a scrollbar associated with the corresponding window / dialog box, and a slidable touch region associated with the scrollbar, to receive a touch input to scroll the menu up or down. Where the touch sensitive display 104 or any associated display window / dialog box is relatively small, the touch region associated with the scrollbar may be small and prone to erroneous inputs.

In at least one embodiment, the processor 100 is configured to receive a press-and-hold input in the touch region associated with the scrollbar. Upon receiving the press-and-hold input, the processor 100 renders directional inputs within the window / dialog box, and defines touch regions associated with the direction inputs. The processor 100 then enters a persistent state where inputs are accepted via the directional input touch regions.

The directional inputs are rendered larger / wider than the scrollbar, and the touch regions defined larger, to facilitate easier touch inputs by the user. The processor 100 may receive inputs from the directional input touch regions and execute discrete movements through the corresponding window / list selection window (i.e., an input to an "up" directional indicator moves a current selection in the corresponding menu up by one list item, and an input to a "down" directional indicator moves a current selection in the corresponding menu down by one list item). When a desired list item is currently selected, the user may touch any portion of the touch sensitive display 104 outside the directional input touch regions to accept the currently selected list item. The processor 100 then derenders the directional inputs and exits the persistent state.

In at least one embodiment, while in the persistent state, the processor 100 may deactivate all inputs except via the directional input touch regions. Furthermore, the directional inputs may be rendered at some peripheral edge of the window / list selection window where an accidental input outside the directional input may result in selection of a different window / dialog box. The processor 100 may define the touch region centered on the corresponding directional input, and extending beyond the boundaries of the directional input, even extending beyond the boundary of the corresponding window / list selection window to include proximal portions of neighboring windows / list selection windows while the persistent state is active.

In at least one embodiment, the processor 100 may define both a slidable touch region and a separate press-and-hold touch region, each associated with the scrollbar. While the user is scrolling with slidable touch inputs, the directional inputs are not rendered. The press-and-hold touch region may be defined larger that slidable touch region such that a user has more flexibility when attempting to activate the directional inputs. In at least one embodiment, the press-and-hold touch region may extend to proximal portions of neighboring, non-active windows / list selection windows.

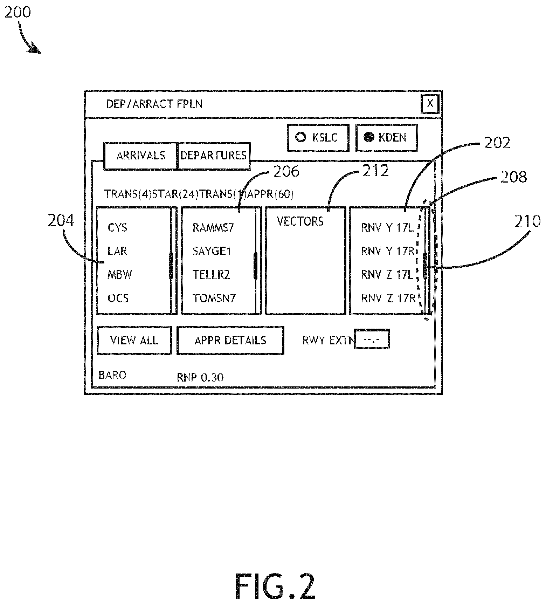

Referring to FIG. 2, a block representation of a display window / list selection window useful for implementing exemplary embodiments is shown. A touch sensitive display may render a display window / list selection window 200 with a plurality of list selection windows 202, 204, 206, 212. One or more of the list selection windows 202, 204, 206, 212 may include lists with more elements than the capacity of the list selection window list selection window 202, 204, 206, 212; those list selection windows 202, 204, 206, 212 may include scrollbars 208 with a corresponding slider 210.

The display window / list selection window 200 may be relatively small and the list selection windows 202, 204, 206, 212 may be densely packed, with relatively small scrollbars 208 and correspondingly small touch sensitive regions. Such small touch sensitive regions are prone to erroneous user inputs when the user attempts to actuate the slider 210 but accidentally selects a region outside the touch sensitive region.

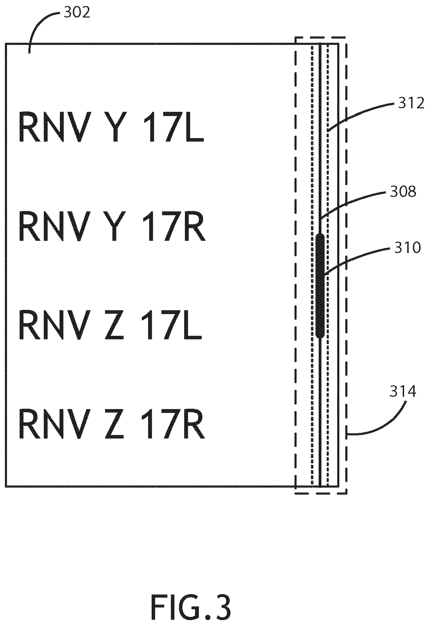

Referring to FIG. 3, a detail block representation of a portion of a display window with list selection and a scrollbar according to an exemplary embodiment is shown. A list selection window 302 defines a scroll bar 308 with a corresponding slider 310. The scrollbar 308 is associated with a touch sensitive region 312 for imparting a slide input to the slider 310 and move the list of items in the list selection window 302.

In at least one embodiment, the touch sensitive region 312 may receive a press-and-hold input. A system managing the list selection window 302, in response to the press-and-hold input, may deactivate or otherwise reject inputs to the touch sensitive region 312 and render directional inputs to move the list up or down, or to change the selected item in the list.

In at least one embodiment, the list selection window 302 may define a separate press-and-hold touch sensitive region 314 to receive the press-and-hold input. In at least one embodiment, the press-and-hold touch sensitive region 314 may be generally larger than the touch sensitive region 312 to allow the user where to press-and-hold without otherwise interfering with the functionality of the display / list selection window 302.

In at least one embodiment, the press-and-hold touch sensitive region 314 may extend beyond the boundaries of the list selection window 302. Such extension beyond the boundaries may only apply to press-and-hold inputs; a simple touch input other than press-and-hold within the press-and-hold touch sensitive region 314 would still be interpreted as a selection outside the list selection window 302.

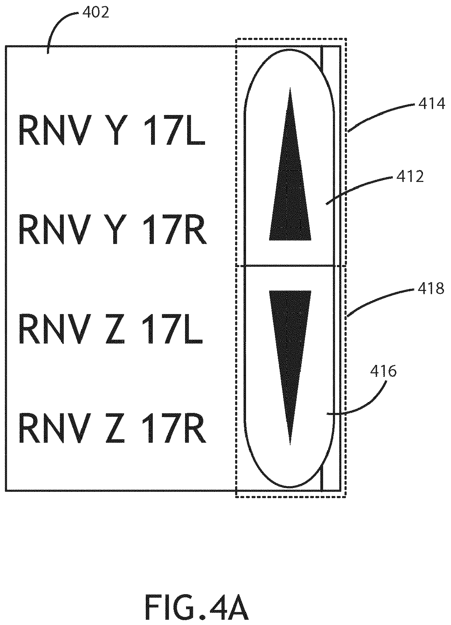

Referring to FIGS. 4A-4C, detail block representations of a portion of a display according to exemplary embodiments are shown. After a system has entered a persistent directional input state, a list selection window 402 with scrollbar slider (obscured) also includes directional inputs 412, 416. The directional inputs 412, 416 may be disposed / rendered over substantially the entire scrollbar (as in FIG. 4A).

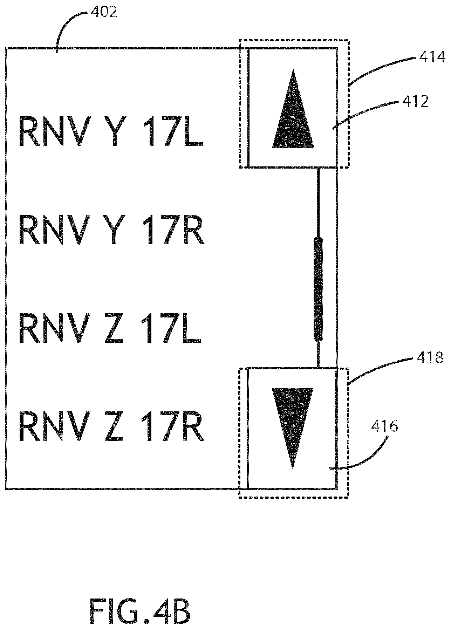

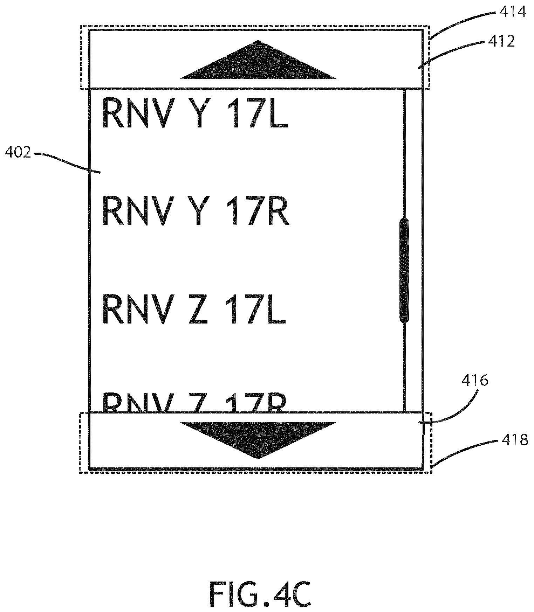

Alternatively, the directional inputs 412, 416 may be disposed at peripheral terminals of the scrollbar (as in FIG. 4B), or along the entire top and bottom edges of the list selection window 402 (as in FIG. 4C). Other dispositions of the directional inputs 412, 416 are envisioned.

In at least one embodiment, each directional input 412, 416 is associated with a corresponding touch sensitive region 414, 418. While in the persistent state, these touch sensitive regions 414, 418 generally supersede any other touch sensitive regions in the list selection window 402 such that touch inputs outside the touch sensitive regions 414, 418 causes the system to exit the persistent state, but does not produce the touch input it normally would. In at least one embodiment, even though inputs from the slider may effectively deactivated or suppressed while in the persistent state, the system may continue to update the position of the slider to reflect the current position of the corresponding list.

In at least one embodiment, the touch sensitive regions 414, 418 may receive single touch inputs. Single touch inputs may cause a current selection in the list to move up or down discretely within the list selection window. Furthermore, the touch sensitive regions 414, 418 may receive press-and-hold inputs. Press-and-hold inputs may cause a current selection in the list to move up or down continuously. Such continuous movement may be at a constant rate or at a steadily increasing rate depending on the duration of the press-and-hold input.

In at least one embodiment, the touch sensitive regions 414, 418 may extend beyond the boundaries of the directional inputs 412, 416. Large touch sensitive regions 414, 418 facilitate inputs by a user even when the list selection window is relatively small. In at least one embodiment, the touch sensitive regions 414, 418 may extend beyond the boundaries of the list selection window 402.

In at least one embodiment, any touch input outside the touch sensitive regions 414, 418 would effectively accept the current selection in the list and exit the persistent state. It may be appreciated a touch input anywhere outside the touch sensitive regions 414, 418 causes the current selection to be selected; it is not necessary to touch the currently selected item. Furthermore, it may be appreciated that while the system is in the persistent state, scrolling through items in the list and changing the current selection may not cause the system to accept each currently selected item until the system exits the persistent state.

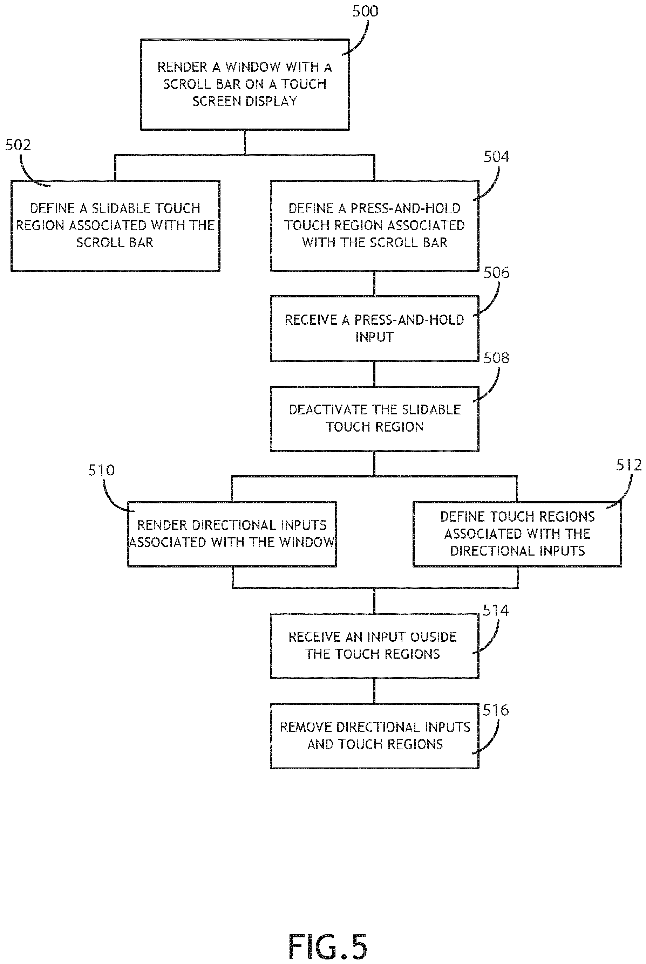

Referring to FIG. 5, a flowchart of a method according to an exemplary embodiment is shown. A system with a touch sensitive input, such as an avionics system display, renders 500 a window / list selection window with a scrollbar. The system defines 502 a slidable touch region associated with the scrollbar. Sliding or single touch inputs to the slidable touch region may move a corresponding list up or down, while a press-and-hold input 506 would cause the system to render 510 directional inputs and define 512 touch regions associated with the directional inputs. Inputs to the directional input touch regions supersede 508 the slidable touch region until the user performs 514 a touch input outside the directional input touch regions. When the user performs 514 a touch input outside the directional input touch region, the directional inputs are de-rendered, the corresponding touch regions are removed 516, and the slidable touch region is reactivated. In at least one embodiment, whichever item is currently selected becomes an active selection in the window / dialog box.

In at least one embodiment, the system may define 504 a specific press-and-hold touch region associated with the scrollbar. The press-and-hold touch region may extend beyond the slidable touch region, and in at least one embodiment, may encompass the entire window / dialog box.

Embodiments of the present disclosure prevent incorrect or unintentional pilot selections on list selection windows leading to the additional overhead involved in making those selections a second time.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the scope of the invention as defined by the claims.

## Claims

1. A computer apparatus comprising:
a touch sensitive display (104); and
at least one processor (100) in data communication with the touch sensitive display and a memory (102) storing processor executable code for configuring the at least one processor to:
render a list selection window comprising an element list and a scrollbar;
define a slidable input region corresponding to the scrollbar;
receive a press-and-hold input from the touch sensitive display; and
in response to the press-and-hold input:
render a plurality of directional inputs; and
define touch input regions, each corresponding to one of the directional inputs,
wherein inputs to the touch input regions supersede inputs to the slidable input region.

2. The computer apparatus of Claim 1, wherein the at least one processor (100) is further configured to:
receive a touch input outside the touch input regions;
de-render the directional inputs; and
deactivate the touch input regions.

3. The computer apparatus of Claim 2, wherein the at least one processor is further configured to accept a current selected item in the list selection window when the touch input regions are deactivated.

4. The computer apparatus of any preceding Claim, wherein the at least one processor is further configured to:
discretely change a currently selection in the list selection window in response to a single touch input to one of the touch sensitive regions; and
scroll through the list selection window in response to a press-and-hold input to one of the touch sensitive regions.

5. The computer apparatus of Claim 4, wherein the at least one processor is further configured to increase a scroll rate through the list selection window based on a duration of the press-and-hold input.

6. The computer apparatus of any preceding Claim, wherein:
the at least one processor is further configured to define a press-and-hold input region; and
the press-and-hold input is received from the press-and-hold input region, and optionally wherein the press-and-hold input region is larger than the slidable input region.

7. A method for controlling scrolling in a touch sensitive display (104) comprising:
rendering a list selection window comprising an element list and a scrollbar;
defining a slidable input region corresponding to the scrollbar;
receiving a press-and-hold input; and
in response to the press-and-hold input:
rendering a plurality of directional inputs; and
defining touch input regions, each corresponding to one of the directional inputs,
wherein inputs to the touch input regions supersede inputs to the slidable input region.

8. The method of Claim 7, further comprising:
receiving a touch input outside the touch input regions;
de-rendering the directional inputs; and
deactivating the touch input regions, and optionally further comprising accepting a currently selected item in the list selection window when the touch input regions are deactivated.

9. The method of Claim 7 or 8, further comprising:
discretely changing a current selection in the list selection window in response to a single touch input to one of the touch sensitive regions; and
scrolling through the list selection window in response to a press-and-hold input to one of the touch sensitive regions, and optionally further comprising increasing a scroll rate through the list selection window based on a duration of the press-and-hold input.

10. The method of Claim 8, further comprising defining a press-and-hold input region, wherein the press-and-hold input is received from the press-and-hold input region, and optionally wherein the press-and-hold input region is larger than the slidable input region.

11. An avionics input system comprising:
a touch sensitive display (104); and
at least one processor (100) in data communication with the touch sensitive display and a memory (102) storing processor executable code for configuring the at least one processor to:
render a list selection window comprising an element list and a scrollbar;
define a slidable input region corresponding to the scrollbar;
receive a press-and-hold input from the touch sensitive display; and
in response to the press-and-hold input:
render a plurality of directional inputs; and
define touch input regions, each corresponding to one of the directional inputs,
wherein inputs to the touch input regions supersede inputs to the slidable input region.

12. The avionics input system of Claim 11, wherein the at least one processor is further configured to:
receive a touch input outside the touch input regions;
de-render the directional inputs; and
deactivate the touch input regions.

13. The avionics input system of Claim 12, wherein the at least one processor is further configured to accept a currently selected item in the list selection window when the touch input regions are deactivated.

14. The avionics input system of Claim 11 or 12, wherein the at least one processor is further configured to:
discretely change a current selection in the list selection window in response to a single touch input to one of the touch sensitive regions; and
scroll through the list selection window in response to a press-and-hold input to one of the touch sensitive regions, and optionally wherein the at least one processor is further configured to increase a scroll rate through the list selection window based on a duration of the press-and-hold input.

15. The avionics input system of any of Claims 11 to 14, wherein:
the at least one processor is further configured to define a press-and-hold input region, larger than the slidable input region; and
the press-and-hold input is received from the press-and-hold input region.
